# EUROPEAN PATENT APPLICATION

(11) **EP 4 679 872 A1**
(43) Date of publication of application: **14.01.2026**
(21) Application number: 24784222.2
(22) Date of filing: 01.04.2024
(51) Int. Cl.: H04W 8/24

(54) **COMMUNICATION METHOD AND RELATED DEVICE**

(30) Priority: 07.04.2023 CN 202310410786
(71) Applicant: Huawei Technologies Co., Ltd., Shenzhen, Guangdong 518129 (CN)
(72) Inventor: GAO, Fei, Shenzhen, Guangdong 518129 (CN); JIAO, Shurong, Shenzhen, Guangdong 518129 (CN); HUA, Meng, Shenzhen, Guangdong 518129 (CN); WANG, Qing, Shenzhen, Guangdong 518129 (CN)
(74) Representative: Maiwald GmbH
(86) International application number: PCT/CN2024/085253
(87) International publication number: WO 2024/208138

(57) **Abstract**

Embodiments of this application disclose a communication method and a related device. The communication method includes: A network device sends capability query signaling to UE; the UE receives the capability query signaling from the network device; the UE sends first capability signaling to the network device, where the first capability signaling indicates first capability information indicating that the UE supports a tone reservation TR technology; and the network device receives the first capability signaling from the UE. Embodiments of this application help the UE perform TR technology-based uplink transmission, thereby reducing a peak-to-average ratio of the uplink transmission of the UE, and improving uplink coverage of the UE.

## Description

This application claims priority to Chinese Patent Application No. 202310410786.3, filed with the China National Intellectual Property Administration on April 7, 2023 and entitled "COMMUNICATION METHOD AND RELATED DEVICE", which is incorporated herein by reference in its entirety.

### TECHNICAL FIELD

This application relates to the field of communication network technologies, and in particular, to a communication method and a related device.

### BACKGROUND

As mobile communication enters the fifth generation mobile communication technology (5th Generation Mobile Communication Technology, 5G) era, a wireless network coverage problem gradually emerges and attracts wide attention in the industry. Reasons are as follows: First, a 5G system works on a higher frequency, resulting in a greater penetration loss and path loss. Second, a 5G network is dedicated to improving a user experience rate, posing a higher requirement on coverage performance. Currently, coverage performance of a 5G uplink service channel still needs to be further improved. In a related research topic, a tone reservation (Tone reservation, TR) technology is used as an alternative solution to the problem. However, the TR technology is relatively complex, it is difficult for a terminal to implement the technology, and a problem of improving uplink coverage still exists.

### SUMMARY

Embodiments of this application provide a communication method and a related device to help reduce a peak-to-average ratio of uplink transmission of user equipment (User Equipment, UE) and improve uplink coverage of the UE.

According to a first aspect, an embodiment of this application provides a communication method, applied to user equipment UE or a chip in the UE. The method includes:
receiving capability query signaling from a network device; and
sending first capability signaling to the network device, where the first capability signaling indicates first capability information indicating that the UE supports a tone reservation TR technology.

It can be learned that in this embodiment of this application, the UE may report, to the network device, a capability of supporting the TR technology, so that the network device configures, for the UE based on the capability information reported by the UE, a scheduling parameter for performing TR technology-based uplink transmission, and indicates the UE to perform the TR technology-based uplink transmission in this scenario. The scheduling parameter indicated by the network device helps reduce complexity of implementing the TR technology by the UE, so that a peak-to-average ratio of an uplink transmission signal of the UE can be reduced, further improving uplink coverage.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In this implementation, the UE may report, to the network device, at least one capability parameter among the quantity of uplink CCs supporting the TR technology, the quantity of APs supporting the TR technology, the SCS supporting the TR technology, and the quantity of RBs supporting the TR technology, so that the network device schedules the UE based on the parameter reported by the UE, and the UE implements the TR technology in a scenario in which the TR technology is supported, further reducing the complexity of implementing the TR technology by the UE.

In a possible implementation, the first capability information is information corresponding to a maximum capability that the UE supports TR technology-based uplink transmission.

In this implementation, the UE may report, to the network device, the information corresponding to the maximum capability of supporting the TR technology, so that the network device can determine, based on the information reported by the UE, a scheduling parameter equal to or weaker than the maximum capability, to indicate the UE to perform the TR technology-based uplink transmission.

In a possible implementation, the method further includes:
receiving downlink control information DCI from the network device, where the DCI is used to schedule, based on the first capability information, the TR technology supported by the UE; and
performing TR technology-based uplink transmission based on the DCI.

In this implementation, the UE may perform, based on the scheduling parameter in the DCI of the network device, the TR technology-based uplink transmission, helping reduce a peak-to-average ratio of an uplink transmission signal of the UE, and further improving uplink coverage of the UE.

In a possible implementation, the method further includes:
receiving first higher layer signaling from the network device, where the first higher layer signaling indicates the UE to enable the TR technology-based uplink transmission.

In this implementation, the UE may enable the TR technology-based uplink transmission based on the first higher layer signaling of the network device.

In a possible implementation, the method further includes:
receiving second higher layer signaling from the network device, where the second higher layer signaling indicates the UE to disable the TR technology-based uplink transmission; and
determining, based on the second higher layer signaling, not to perform the TR technology-based uplink transmission.

In this implementation, the UE may disable the TR technology-based uplink transmission based on the second higher layer signaling of the network device.

In a possible implementation, the method further includes:
sending second capability signaling to the network device, where the second capability signaling indicates second capability information indicating that the UE supports the TR technology, and the first capability information and the second capability information indicate different values of a same uplink transmission parameter of the TR technology supported by the UE.

In this implementation, the UE may report, to the network device, a plurality of groups of capability information of supporting the TR technology. The plurality of groups of capability information indicate different scenarios in which the UE supports the TR technology. In this case, the network device may configure, based on the plurality of groups of capability information, scheduling of the TR technology-based uplink transmission performed by the UE, to indicate a specific scenario in which the UE performs the uplink transmission by using the TR technology.

According to a second aspect, an embodiment of this application provides a communication method, applied to a network device or a chip in the network device. The method includes:
sending capability query signaling to user equipment UE; and
receiving first capability signaling from the UE, where the first capability signaling indicates first capability information indicating that the UE supports a tone reservation TR technology.

It can be learned that in this embodiment of this application, the network device may receive a capability, which is reported by the UE, of supporting the TR technology, configure, for the UE based on the capability information reported by the UE, a scheduling parameter for performing TR technology-based uplink transmission, and indicate the UE to perform the TR technology-based uplink transmission in this scenario. The scheduling parameter indicated by the network device helps reduce complexity of implementing the TR technology by the UE, so that a peak-to-average ratio of an uplink transmission signal of the UE can be reduced, further improving uplink coverage.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In this implementation, the network device may receive at least one capability parameter among the quantity of uplink CCs supporting the TR technology, the quantity of APs supporting the TR technology, the SCS supporting the TR technology, and the quantity of RBs supporting the TR technology that are reported by the UE, and schedule the UE based on the parameter reported by the UE, so that the UE implements the TR technology in a scenario in which the TR technology is supported, further reducing the complexity of implementing the TR technology by the UE.

In a possible implementation, the first capability information is information corresponding to a maximum capability that the UE supports TR technology-based uplink transmission.

In this implementation, the network device may determine, based on the information corresponding to the maximum capability reported by the UE, a scheduling parameter equal to or weaker than the maximum capability, to indicate the UE to perform the TR technology-based uplink transmission.

In a possible implementation, the method further includes:
sending downlink control information DCI to the UE, where the DCI is used to schedule, based on the first capability information, the TR technology supported by the UE.

In this implementation, the DCI may include the scheduling parameter of the UE for the TR technology-based uplink transmission, and the network device may indicate, by using the DCI, the UE to perform the TR technology-based uplink transmission.

In a possible implementation, the method further includes:
sending first higher layer signaling to the UE, where the first higher layer signaling indicates the UE to enable the TR technology-based uplink transmission.

In this implementation, the network device may indicate, by using the first higher layer signaling, the UE to enable the TR technology-based uplink transmission.

In a possible implementation, the method further includes:
sending second higher layer signaling to the UE, where the second higher layer signaling indicates the UE to disable the TR technology-based uplink transmission.

In this implementation, the network device may indicate, by using the second higher layer signaling, the UE to disable the TR technology-based uplink transmission.

In a possible implementation, the method further includes:
receiving second capability signaling from the UE, where the second capability signaling indicates second capability information indicating that the UE supports the TR technology, and the first capability information and the second capability information indicate different values of a same uplink transmission parameter of the TR technology supported by the UE.

In this implementation, the network device may receive a plurality of groups of capability information reported by the UE. The plurality of groups of capability information indicate different scenarios in which the UE supports the TR technology. In this case, the network device may configure, based on the plurality of groups of capability information, scheduling of the TR technology-based uplink transmission performed by the UE, to indicate a specific scenario in which the UE performs the uplink transmission by using the TR technology.

According to a third aspect, an embodiment of this application provides a communication apparatus, used in user equipment UE or a chip in the UE. The apparatus includes a first transceiver unit. The first transceiver unit is configured to:
receive capability query signaling from a network device; and
send first capability signaling to the network device, where the first capability signaling indicates first capability information indicating that the UE supports a tone reservation TR technology.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In a possible implementation, the first capability information is information corresponding to a maximum capability that the UE supports TR technology-based uplink transmission.

In a possible implementation, the first transceiver unit is further configured to:
receive downlink control information DCI from the network device, where the DCI is used to schedule, based on the first capability information, the TR technology supported by the UE; and
perform TR technology-based uplink transmission based on the DCI.

In a possible implementation, the first transceiver unit is further configured to:
receive first higher layer signaling from the network device, where the first higher layer signaling indicates the UE to enable the TR technology-based uplink transmission.

In a possible implementation, the first transceiver unit is further configured to:
receive second higher layer signaling from the network device, where the second higher layer signaling indicates the UE to disable the TR technology-based uplink transmission; and
determine, based on the second higher layer signaling, not to perform the TR technology-based uplink transmission.

In a possible implementation, the first transceiver unit is further configured to:
send second capability signaling to the network device, where the second capability signaling indicates second capability information indicating that the UE supports the TR technology, and the first capability information and the second capability information indicate different values of a same uplink transmission parameter of the TR technology supported by the UE.

According to a fourth aspect, an embodiment of this application provides a communication apparatus, used in a network device or a chip in the network device. The apparatus includes a second transceiver unit. The second transceiver unit is configured to:
send capability query signaling to user equipment UE; and
receive first capability signaling from the UE, where the first capability signaling indicates first capability information indicating that the UE supports a tone reservation TR technology.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In a possible implementation, the first capability information is information corresponding to a maximum capability that the UE supports TR technology-based uplink transmission.

In a possible implementation, the second transceiver unit is further configured to:
send downlink control information DCI to the UE, where the DCI is used to schedule, based on the first capability information, the TR technology supported by the UE.

In a possible implementation, the second transceiver unit is further configured to:
send first higher layer signaling to the UE, where the first higher layer signaling indicates the UE to enable the TR technology-based uplink transmission.

In a possible implementation, the second transceiver unit is further configured to:
send second higher layer signaling to the UE, where the second higher layer signaling indicates the UE to disable the TR technology-based uplink transmission.

In a possible implementation, the second transceiver unit is further configured to:
receive second capability signaling from the UE, where the second capability signaling indicates second capability information indicating that the UE supports the TR technology, and the first capability information and the second capability information indicate different values of a same uplink transmission parameter of the TR technology supported by the UE.

It may be understood that because the method embodiments and the apparatus embodiments are different presentation forms of a same technical concept, content in the first aspect of embodiments of this application should be synchronously adapted to the third aspect of embodiments of this application, content in the second aspect of embodiments of this application should be synchronously adapted to the fourth aspect of embodiments of this application, and a same or similar beneficial effect can be achieved. Details are not described herein again.

According to a fifth aspect, an embodiment of this application provides a communication device, including a processor and a memory. The memory is configured to store one or more programs. The program includes instructions used to perform the method according to the first aspect.

According to a sixth aspect, an embodiment of this application provides a communication device, including a processor and a memory. The memory is configured to store one or more programs. The program includes instructions used to perform the method according to the second aspect.

According to a seventh aspect, an embodiment of this application provides a chip, including a processor, configured to invoke a computer program from a memory and run the computer program, so that a device equipped with the chip performs the method according to the first aspect or the second aspect.

According to an eighth aspect, an embodiment of this application provides a computer-readable storage medium. The computer-readable storage medium stores a computer program. When the computer program is run, the method according to the first aspect or the second aspect is implemented.

According to a ninth aspect, an embodiment of this application provides a computer program product. The computer program product includes computer program code. When the computer program code is run, the method according to the first aspect or the second aspect is implemented.

### BRIEF DESCRIPTION OF DRAWINGS

To describe technical solutions in embodiments of this application or in the background more clearly, the following briefly describes the accompanying drawings for describing embodiments of this application or the background.
FIG. 1 is an overall diagram of a TR technology according to an embodiment of this application;
FIG. 2 is a diagram of a frequency domain of a TR technology according to an embodiment of this application;
FIG. 3 is a diagram of an implementation process of a TR technology according to an embodiment of this application;
FIG. 4 is a diagram of an architecture of a communication system according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of a communication apparatus according to an embodiment of this application;
FIG. 11 is a diagram of a structure of a communication apparatus according to an embodiment of this application;
FIG. 12 is a diagram of a structure of a communication device according to an embodiment of this application; and
FIG. 13 is a diagram of a structure of another communication device according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned in the specification mean that specific features, structures, or characteristics described in combination with embodiments may be included in at least one embodiment of this application. The phrase shown in various locations in this specification may not necessarily refer to a same embodiment, and is not an independent or candidate embodiment exclusive from another embodiment. It is explicitly and implicitly understood by persons skilled in the art that embodiments described in this specification may be combined with another embodiment.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a terminal device and an application that runs on the terminal device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

The following briefly describes a related technical background of this application, for better understanding of this application.

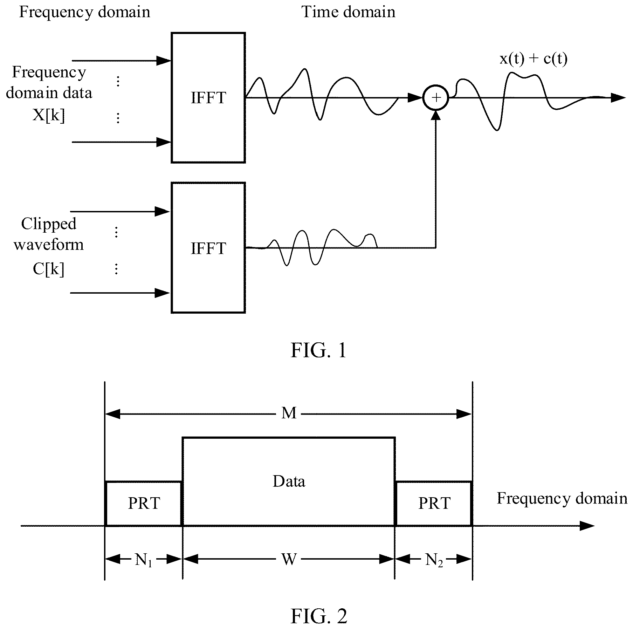

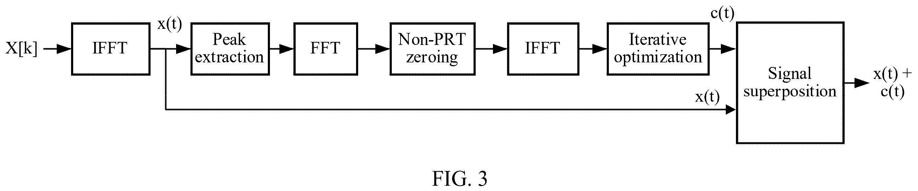

It should be understood that a tone is equivalent to a subcarrier (Sub-carrier) in an NR technology. The TR technology is a subcarrier reservation technology, and is also referred to as a reservation subcarrier technology in some scenarios. Refer to FIG. 1 and FIG. 2 together. A core idea of the TR is to select some subcarriers W (M > W) from several specified subcarriers M to carry data information X, carry some redundant data on remaining peak reduction subcarriers (Peak reduction Tone, PRT) N₁ and N₂ (N₁ ≠ N₂), and design and process the redundant data in frequency domain to obtain a peak-clipping waveform c(t) through inverse fast Fourier transform (Inverse Fast Fourier Transform, IFFT), which is superimposed on a time domain waveform of original data information x(t) and then is sent. A peak value of the original data information x(t) is canceled in time domain to suppress a peak-to-average ratio (Peak-to-Average Power Ratio, PAPR). The TR technology uses a frequency resource as costs to obtain a maximum power reduction (Maximum Power Reduction, MPR) or a PAPR reduction, improving coverage performance. Compared with a crest factor reduction (Crest Factor Reduction, CFR) technology, the TR technology reduces the PAPR without affecting data transmission performance in an effective bandwidth. For specific implementation of the TR technology, refer to FIG. 3. Frequency domain data X[k] undergoes IFFT to obtain the original data information x(t), and then undergoes a series of operations such as peak extraction, fast Fourier transform (fast Fourier transform, FFT), non-PRT zeroing, IFFT, and iterative optimization to obtain the peak-clipping waveform c(t). Finally, the original data information x(t) and the peak-clipping waveform c(t) are superposed and sent.

Implementation of the TR technology is limited by complexity of IFFT/FFT, and an increase in a quantity of resource blocks (Resource Block, RB), a quantity of antenna ports (Antenna Port, AP), a quantity of carrier components (Carrier Component, CC), and a subcarrier spacing (Sub-Carrier Spacing, SCS) that are closely related to the TR technology causes an increase in complexity of implementing the TR technology. Examples are as follows:

An increase in a quantity of scheduled RBs of the UE results in an increase in a quantity of IFFT/FFT points.
an increase in a quantity of scheduled APs of the UE and a quantity of scheduled CCs of the UE results in an increase in a quantity of execution times of IFFT/FFT; and
an increase in a scheduled SCS of the UE shortens a time of generating a waveform; and if a time of a processing procedure of overall data remains unchanged, a peak-clipping waveform may not be generated within a unit time, and extra overheads are required to meet a delay processing requirement.

In addition, iterative calculation needs to be performed on a signal on the PRT in real time, and an IFFT operation needs to be performed on the algorithm. This undoubtedly increases costs and power consumption, and is not conducive to implementing the TR technology by the UE. It can be learned that due to high complexity of the TR technology, it is difficult for the UE to further increase a transmit power, and an uplink coverage problem cannot be better resolved.

The following briefly describes an architecture to which this application can be applied.

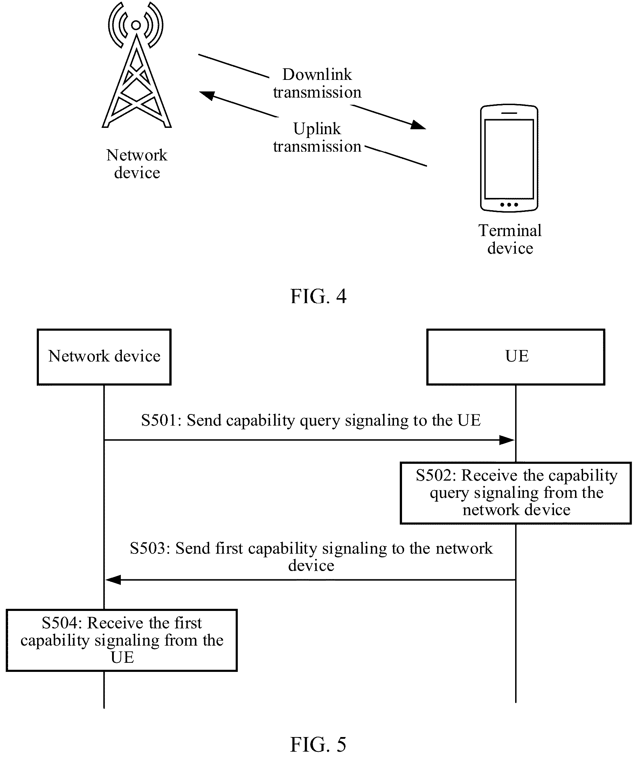

FIG. 4 is a diagram of an architecture of a communication system according to an embodiment of this application. As shown in FIG. 4, the communication system includes a terminal device and a network device. The terminal device and the network device may perform wireless communication by using an air interface resource. For example, the communication system may be a new generation radio access technology (New Radio Access Technology, NR) system. The air interface resource may include at least one of a time domain resource, a frequency domain resource, a code resource, and a spatial resource. In embodiments of this application, "at least one" may alternatively be described as one or more, and "more" may be two, three, four, or more. This is not limited in this application.

The terminal device may also be referred to as a terminal, and may be a device having a radio transceiver function. The terminal device may be deployed on land, including an indoor device, an outdoor device, a handheld device, or a vehicle-mounted device, or may be deployed on the water (for example, on a ship), or may be deployed in the air (for example, on a plane, a balloon, or a satellite). The terminal device may be user equipment. The UE includes a handheld device, a vehicle-mounted device, a wearable device, or a computing device that has a wireless communication function. For example, the UE may be a mobile phone (mobile phone), a tablet computer, or a computer that has a wireless transceiver function. The terminal device may alternatively be a VR (virtual reality, virtual reality) terminal device, an AR (augmented reality, augmented reality) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), or the like. In embodiments of this application, the terminal may be an apparatus configured to implement a function of the terminal, or may be an apparatus, for example, a chip system, that can support the terminal in implementing the function. The apparatus may be mounted in the terminal. In embodiments of this application, the chip system may include a chip, or may include a chip and another discrete component. In this application, an example in which the terminal is UE is used to describe the technical solution provided in embodiments of this application.

The network device includes an access network device, for example, a base station (base station, BS). The BS may be a device that is deployed in a radio access network and that can perform wireless communication with the terminal. The base station may be in a plurality of forms, for example, a macro base station, a micro base station, a relay station, and an access point. For example, the base station in this embodiment of this application may be a base station in 5G or an eNB (Evolved NodeB) base station in long term evolution (Long Term Evolution, LTE). The base station in 5G may also be referred to as a transmission reception point (Transmission Reception Point, TRP) or a gNB (Next-Generation NodeB) base station. In embodiments of this application, an apparatus configured to implement a function of the network device may be a network device; or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is a network device. For example, the network device may be a base station. Optionally, in some deployments of the network device, the network device may be a central unit (central unit, CU), a distributed unit (distributed unit, DU), or the like. For example, operations or steps of a radio link control (Radio link Control, RLC) layer, a media access control (Media Access Control, MAC) layer, and a radio resource control (Radio Resource Control, RRC) layer may be performed by the CU, and operations or steps of a physical (Physical, PHY) layer may be performed by the DU. In some other deployments of the network device, the CU may be further divided into a CU-control plane (control plane, CP), a CU-user plane (user plane, UP), and the like. In still some other deployments of the network device, the network device may alternatively be an antenna unit (radio unit, RU). In still some other deployments of the network device, the network device may alternatively be an open radio access network (open radio access network, ORAN) architecture or the like. A deployment manner of the network device is not limited in this embodiment of this application. For example, when the network device is of the ORAN architecture, the network device shown in embodiments of this application may be an access network device in an ORAN, a module in the access network device, or the like. In the ORAN architecture, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU.

The technical solutions provided in embodiments of this application may be applied to wireless communication between a terminal device and a network device, or may be applied to wireless communication between network devices and wireless communication between terminal devices. In embodiments of this application, the term "wireless communication" may also be referred to as "communication" for short, and the term "communication" may also be described as "data transmission", "information transmission", or "transmission".

The technical solutions provided in this application are described in detail with reference to specific implementations.

FIG. 5 is a schematic flowchart of a communication method according to an embodiment of this application. The method may be implemented based on the communication system shown in FIG. 4. As shown in FIG. 5, the method may include the following steps.

S501: A network device sends capability query signaling to UE.

In this embodiment of this application, the capability query signaling is used to query whether the UE has a capability of supporting the TR technology, or the capability query signaling indicates the UE to send capability information indicating that the TR technology is supported. The operation may be actively initiated by the network device, or may be initiated under triggering of the UE. For example, the network device sends UECapabilityEnquiry information to the UE. For example, the capability query signaling may be an RRC message, and may be carried on a logical channel of a downlink dedicated control channel (Downlink Dedicated Control Channel, DL-DCCH). For example, when the network device is of an ORAN architecture, step S501 may be performed by a CU.

S502: The UE receives the capability query signaling from the network device.

S503: The UE sends first capability signaling to the network device.

The first capability signaling indicates first capability information indicating that the UE supports a tone reservation TR technology. For example, the first capability signaling may be an RRC message, and may be carried on a logical channel of an uplink dedicated control channel (Uplink Dedicated Control Channel, UL-DCCH).

In embodiments of this application, the first capability information may be a group of parameters reported by the UE, to indicate at least one of the following parameters related to uplink transmission: a quantity of uplink carrier components CCs supporting the TR technology, a quantity of antenna ports APs supporting the TR technology, a subcarrier spacing SCS supporting the TR technology, and a quantity of resource blocks RBs supporting the TR technology. For example, the first capability information may be {a quantity of uplink CCs supporting the TR technology, a quantity of antenna ports APs supporting the TR technology, an SCS supporting the TR technology, a quantity of RBs supporting the TR technology} (described as {CC, AP, SCS, RB} below), or the first capability information may be {a quantity of antenna ports APs supporting the TR technology, an SCS supporting the TR technology} or the like, that is, the first capability information may be different combinations of the foregoing parameters. However, in communication with the network device, the UE usually interacts with the network device based on an agreed combination. For example, the UE reports a capability based on {CC, AP, SCS, RB}, and the network device schedules the UE based on {CC, AP, SCS, RB}.

The quantity of uplink CCs indicates a configuration of a quantity of CCs or a configuration of a maximum quantity of CCs that support TR technology-based uplink transmission when the UE is configured to work in a single base station carrier aggregation (Carrier aggregation, CA) or dual connectivity (Dual Connectivity, DC) mode. For example, if the quantity of CCs reported by the UE is 2, it indicates that the UE supports the TR technology-based uplink transmission when the UE is configured to work in the CA or DC mode, and supports the TR technology-based uplink transmission when the UE is configured to work in two CCs. Alternatively, it may be understood that when the UE is configured to work on a maximum of two CCs, the UE supports the TR technology-based uplink transmission, that is, in uplink transmission of a configuration of two CCs and a configuration of one CC, the UE supports the TR technology-based uplink transmission. It should be understood that, in this embodiment of this application, a CC configuration may be understood as a cell configuration.

The quantity of APs indicates a configuration of a quantity of APs or a configuration of a maximum quantity of APs when the UE supports the TR technology-based uplink transmission. For example, if the quantity of APs reported by the UE is 1, it indicates that the UE supports the TR technology-based uplink transmission only in a configuration of a single AP (for example, the UE performs the uplink transmission by using a demodulation reference signal (Demodulation Reference Signal, DMRS) AP0 (DM-RS port 0)). For example, if the quantity of APs reported by the UE is 2, it indicates that the UE supports the TR technology-based uplink transmission in a configuration of two APs. Specifically, two APs that are specifically used are determined by a base station via downlink control information (Downlink Control Information, DCI). That the quantity of APs reported by the UE is 2 may also be understood as that the TR technology-based uplink transmission is supported in a configuration of a maximum of two APs, that is, in uplink transmission of the configuration of two APs or the configuration of a single AP, the TR technology-based uplink transmission is supported.

The SCS indicates a configuration of the SCS or a configuration of a maximum SCS when the UE supports the TR technology-based uplink transmission. For example, if an SCS reported by the UE is 15 kHz, it indicates that the UE supports the TR technology-based uplink transmission only in uplink transmission with an SCS of 15 kHz. For example, if an SCS reported by the UE is 30 kHz, it indicates that the UE supports the TR technology-based uplink transmission in uplink transmission with a maximum of 30 kHz, that is, in uplink transmission with an SCS of 15 kHz or 30 kHz, the UE supports the TR technology-based uplink transmission.

The RB indicates a configuration of a quantity of RBs or a configuration of a maximum quantity of RBs when the UE supports the TR technology-based uplink transmission. For example, if the UE reports an indication indicating 36 RBs, it indicates that the UE supports the TR technology-based uplink transmission when a quantity of scheduled RBs is 36, or it may be understood as that the UE supports the TR technology-based uplink transmission when a quantity of scheduled RBs does not exceed 36.

In this implementation, the UE may report, to the network device, at least one capability parameter among the quantity of uplink CCs supporting the TR technology, the quantity of APs supporting the TR technology, the SCS supporting the TR technology, and the quantity of RBs supporting the TR technology, so that the network device schedules the UE based on the parameter reported by the UE, and the UE implements the TR technology in a scenario in which the TR technology is supported, further reducing the complexity of implementing the TR technology by the UE.

In some scenarios, the parameter in the first capability information may further indicate, in a manner of, for example, setting the parameter in the first capability information to an invalid value, that the UE does not support the TR technology-based uplink transmission. For example, the quantity of uplink CCs may further indicate that the UE does not support the TR technology-based uplink transmission when the UE is configured to work in the CA or DC mode. For example, if the quantity of CCs reported by the UE is 1, where 1 indicates a single CC (single cell operation), it indicates that the UE does not support the TR technology-based uplink transmission when the UE is configured to work in the CA or DC mode. Other parameters can be deduced by analogy. Details are not described herein. It should be noted that the quantity of CCs reported by the UE being 1 may further indicate that the UE supports the TR technology-based uplink transmission when the UE is configured to work in one CC (the UE is configured to work in a single cell).

S504: The network device receives the first capability signaling from the UE.

In this embodiment of this application, the network device may schedule the UE based on the first capability information. For example, the network device may configure a scheduling parameter of the TR technology-based uplink transmission for the UE. In this scenario, the UE may perform the TR technology-based uplink transmission, that is, reduce a PAPR of an uplink transmission waveform by using the TR technology. For example, the scheduling parameter may include a time domain orthogonal frequency division multiplexing (Orthogonal Frequency Division Multiplexing, OFDM) symbol position, a frequency domain RB position, a modulation and coding scheme (Modulation and code scheme, MCS), an AP, and the like for uplink transmission. The scheduling parameter is carried in the DCI.

It can be learned that in this embodiment of this application, the UE may report, to the network device, the capability of supporting the TR technology. The network device may configure, for the UE based on the capability information reported by the UE, the scheduling parameter for performing the TR technology-based uplink transmission, to indicate the UE to perform the TR technology-based uplink transmission in this scenario. The scheduling parameter indicated by the network device helps reduce the complexity of implementing the TR technology by the UE, so that a PAPR of an uplink transmission signal of the UE can be reduced, further improving uplink coverage.

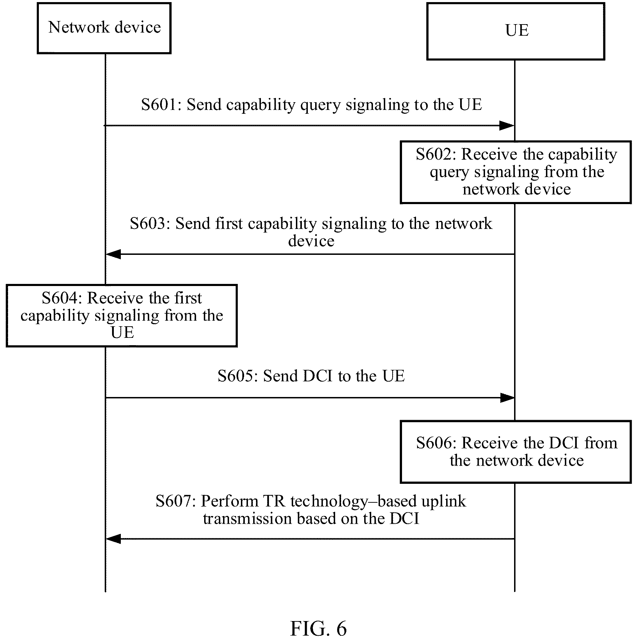

FIG. 6 is a schematic flowchart of another communication method according to an embodiment of this application. As shown in FIG. 6, the method may include the following steps.

S601: A network device sends capability query signaling to UE.

S602: The UE receives the capability query signaling from the network device.

S603: The UE sends first capability signaling to the network device.

The first capability signaling indicates first capability information indicating that the UE supports a TR technology. For example, the first capability signaling may be an RRC message, and may be carried on a logical channel of a UL-DCCH. The first capability information indicates at least one of the following uplink transmission parameters: a quantity of uplink CCs supporting the TR technology, a quantity of APs supporting the TR technology, an SCS supporting the TR technology, and a quantity of RBs supporting the TR technology.

S604: The network device receives the first capability signaling from the UE.

S605: The network device sends DCI to the UE.

The DCI includes a scheduling parameter for uplink transmission of the UE. The DCI or the scheduling parameter is used to schedule, based on the first capability information, the TR technology supported by the UE, in other words, the DCI is determined by the network device based on the first capability information.

For example, the first capability information is information corresponding to a maximum capability that the UE supports TR technology-based uplink transmission. For example, if {CC, AP, SCS, RB} corresponding to a maximum capability that the UE supports the TR technology is {2, 2, 30, 64}, the UE may report {2, 2, 30, 64} to the network device. In this case, the network device may determine, based on the first capability information, scheduling information equal to or weaker than a maximum capability reported by the UE, and indicate, by using the scheduling information in the DCI, the UE to perform the TR technology-based uplink transmission under the configuration. For example, the scheduling information may be {1, 1, 15, 16}, {1, 30, 32}, or {2, 2, 30, 64}.

In this implementation, the UE may report, to the network device, the information corresponding to the maximum capability of supporting the TR technology, so that the network device can determine, based on the information reported by the UE, scheduling information equal to or weaker than the maximum capability, to indicate the UE to perform the TR technology-based uplink transmission.

In a possible implementation, the UE can perform the TR technology-based uplink transmission and the scheduling parameter for the uplink transmission only when the scheduling parameter for the uplink transmission included in the DCI meets all uplink transmission parameters included in the first capability information. For example, if the first capability information reported by the UE indicates two uplink transmission parameters, that is, the first capability information {AP, SCS} is {1, 15}, the UE reports {1, 15} to the network device. The network device indicates, by using the DCI, the scheduling parameter for the uplink transmission of the UE. For example, the scheduling parameter indicates that a quantity of APs performing uplink transmission on a physical uplink shared channel (Physical uplink shared channel, PUSCH) is 1. It is assumed that an AP of the indicated DMRS is an AP 0, and an SCS of a bandwidth part (Bandwidth part, BWP) in which the UE currently works is 15 kHz. The two scheduling parameters both meet the first capability information reported by the UE. Therefore, the UE performs the TR technology-based uplink transmission and the scheduling parameter indicated by the DCI.

In a possible implementation, at least one uplink transmission parameter of the quantity of uplink CCs supporting the TR technology, the quantity of APs supporting the TR technology, the SCS supporting the TR technology, and the quantity of RBs supporting the TR technology may be predefined by using a protocol. For example, the protocol predefines that the quantity of uplink CCs supporting the TR technology is 1, that is, predefines that the UE does not support the TR technology-based uplink transmission when the UE is configured to work in a CA or DC mode, or predefines that the UE supports the TR technology-based uplink transmission when the UE is configured to work in a single CC. For example, the protocol predefines that the quantity of RBs supporting the TR technology is 36, that is, predefines that the UE supports the TR technology-based uplink transmission when it is indicated that frequency domain resource assignment (Frequency domain resource assignment, FDRA) is less than or equal to 36 RBs. Whether the UE actually performs the TR technology-based uplink transmission still needs to refer to other parameters or scheduling information other than the predefined parameter or the predefined scheduling information.

S606: The UE receives the DCI from the network device.

S607: The UE performs TR technology-based uplink transmission based on the DCI.

In this implementation, the UE may perform the TR technology-based uplink transmission based on the scheduling parameter in the DCI of the network device, helping reduce a PAPR of an uplink transmission signal of the UE, and further improving uplink coverage.

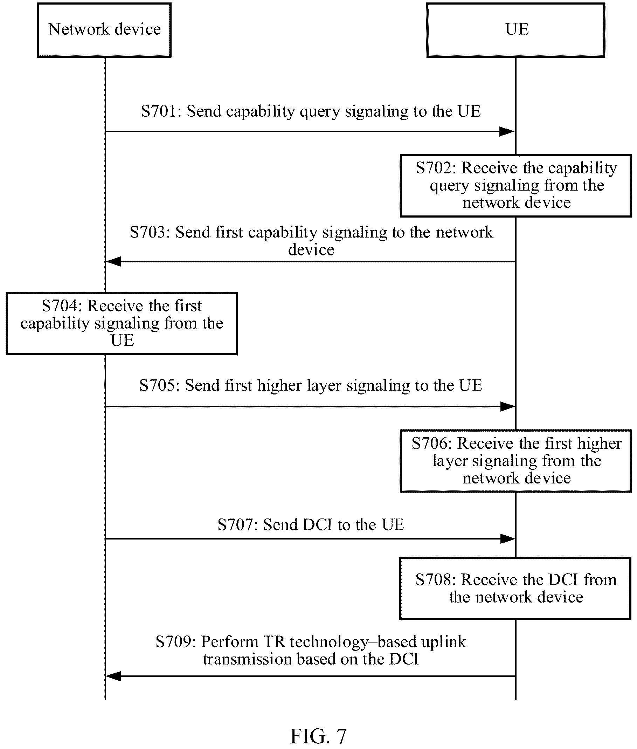

FIG. 7 is a schematic flowchart of another communication method according to an embodiment of this application. As shown in FIG. 7, the method may include the following steps.

S701: A network device sends capability query signaling to UE.

S702: The UE receives the capability query signaling from the network device.

S703: The UE sends first capability signaling to the network device.

The first capability signaling indicates first capability information indicating that the UE supports a TR technology. For example, the first capability signaling may be an RRC message, and may be carried on a logical channel of a UL-DCCH. The first capability information indicates at least one of the following uplink transmission parameters: a quantity of uplink CCs supporting the TR technology, a quantity of APs supporting the TR technology, an SCS supporting the TR technology, and a quantity of RBs supporting the TR technology.

S704: The network device receives the first capability signaling from the UE.

S705: The network device sends first higher layer signaling to the UE.

The first higher layer signaling indicates the UE to enable the TR technology-based uplink transmission. For example, the first higher layer signaling may be an RRC message, and the network device may enable, by using an RRC parameter, the TR technology-based uplink transmission performed by the UE, that is, the network device indicates, by using the RRC parameter, that the UE can perform, in a scenario in which the TR technology is supported, the uplink transmission by using the TR technology.

For example, the network device may configure an expansion factor of the TR technology by using higher layer signaling (for example, RRC). For example, the expansion factor is semi-statically configured to indicate the UE to determine a quantity of subcarriers of a PRT. In this case, the UE may send a peak-clipping waveform c(t) based on the quantity of subcarriers indicated by the higher layer signaling, implicitly indicate the UE to enable the TR technology-based uplink transmission. For example, when N₁ = N₂, the expansion factor may be N₁/M or N₂/M; and when N₁ ≠ N₂, the expansion factors are N₁/M and N₂/M.

In this implementation, the network device may implicitly indicate, by using the higher layer parameter, the UE to enable the TR technology-based uplink transmission.

S706: The UE receives the first higher layer signaling from the network device.

S707: The network device sends DCI to the UE.

The DCI includes a scheduling parameter for uplink transmission of the UE. The DCI or the scheduling parameter is used to schedule, based on the first capability information, the TR technology supported by the UE.

S708: The UE receives the DCI from the network device.

S709: The UE performs TR technology-based uplink transmission based on the DCI.

For example, when the DCI is not used to schedule the UE based on the first capability information, the UE determines not to perform the TR technology-based uplink transmission. That is, when the network device indicates, by using the higher layer parameter, the UE to enable the TR technology-based uplink transmission, if the scheduling parameter in the DCI is not determined based on a capability reported by the UE, the UE does not perform the TR technology-based uplink transmission. For example, the UE may perform the uplink transmission based on a non-TR waveform.

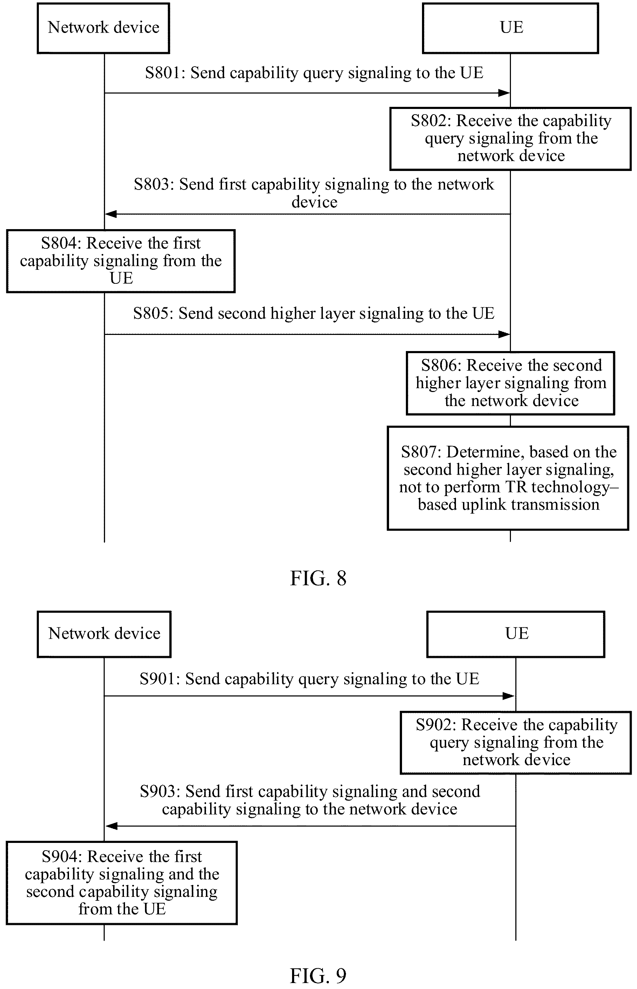

FIG. 8 is a schematic flowchart of another communication method according to an embodiment of this application. As shown in FIG. 8, the method may include the following steps.

S801: A network device sends capability query signaling to UE.

S802: The UE receives the capability query signaling from the network device.

S803: The UE sends first capability signaling to the network device.

The first capability signaling indicates first capability information indicating that the UE supports a TR technology. For example, the first capability signaling may be an RRC message, and may be carried on a logical channel of a UL-DCCH. The first capability information indicates at least one of the following uplink transmission parameters: a quantity of uplink CCs supporting the TR technology, a quantity of APs supporting the TR technology, an SCS supporting the TR technology, and a quantity of RBs supporting the TR technology.

S804: The network device receives the first capability signaling from the UE.

S805: The network device sends second higher layer signaling to the UE.

The second higher layer signaling indicates the UE to disable the TR technology-based uplink transmission. For example, the second higher layer signaling may be RRC signaling, and the network device may disable, by using an RRC parameter, the TR technology-based uplink transmission performed by the UE, that is, the network device indicates, by using the RRC parameter, the UE not to perform the uplink transmission by using the TR technology.

S806: The UE receives the second higher layer signaling from the network device.

S807: The UE determines, based on the second higher layer signaling, not to perform the TR technology-based uplink transmission.

In this implementation, the network device may indicate, by using the higher layer parameter, the UE to disable the TR technology-based uplink transmission. That is, regardless of whether DCI indicates, based on the first capability information, the UE to perform the uplink transmission, the UE does not perform the uplink transmission by using the TR technology.

FIG. 9 is a schematic flowchart of another communication method according to an embodiment of this application. As shown in FIG. 9, the method may include the following steps.

S901: A network device sends capability query signaling to UE.

S902: The UE receives the capability query signaling from the network device.

S903: The UE sends first capability signaling and second capability signaling to the network device.

The first capability signaling indicates first capability information indicating that the UE supports a TR technology. The second capability signaling indicates second capability information indicating that the UE supports the TR technology. For example, the first capability signaling and the second capability signaling may be RRC messages, and may be carried on a logical channel of a UL-DCCH. The first capability information and the second capability information both may indicate at least one of the following uplink transmission parameters: a quantity of uplink CCs supporting the TR technology, a quantity of APs supporting the TR technology, an SCS supporting the TR technology, and a quantity of RBs supporting the TR technology. The first capability information and the second capability information indicate different values of a same uplink transmission parameter of the TR technology supported by the UE. For example, the first capability information may be {1, 1, 15, 16}, and the second capability information may be {1, 1, 30, 32}.

In a possible implementation, the first capability information and the second capability information each include a same type of uplink transmission parameter, but at least one uplink transmission parameter has a different value. For example, the first capability information includes {the quantity of APs supporting the TR technology, the SCS supporting the TR technology} = {1, 15}, and the second capability information includes {the quantity of APs supporting the TR technology, the SCS supporting the TR technology} = {2, 30}. The first capability information and the second capability information include a same type of uplink transmission parameter, that is, the quantity of APs supporting the TR technology and the SCS supporting the TR technology. The first capability information and the second capability information have at least one uplink transmission parameter whose value is different. In this example, the first capability information and the second capability information include two same types of uplink transmission parameters whose values are different, to be specific, the quantity of APs supporting the TR technology included in the first capability information is different from the quantity of APs supporting the TR technology included in the second capability information, and the SCS supporting the TR technology included in the first capability information is different from the SCS supporting the TR technology included in the second capability information. If the first capability information includes {the quantity of APs supporting the TR technology, the SCS supporting the TR technology} = {1, 15}, and the second capability information includes {the quantity of APs supporting the TR technology, the SCS supporting the TR technology} = {2, 15}, values of one of the two same uplink transmission parameters included in the first capability information and the second capability information are different, to be specific, the quantity of APs supporting the TR technology included in the first capability information is different from the quantity of APs supporting the TR technology included in the second capability information, and the SCS supporting the TR technology included in the first capability information is the same as the SCS supporting the TR technology included in the second capability information. For example, the first capability information and the second capability information may be defined in the following form:

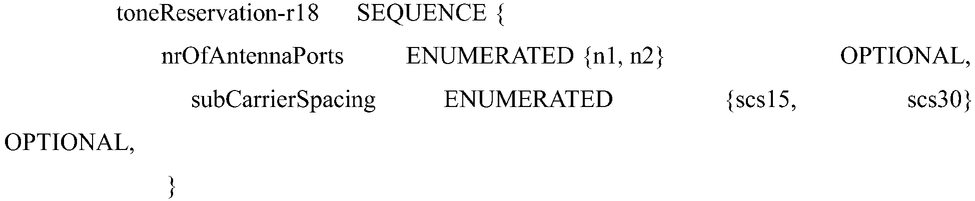

nrOfAntennaPorts indicates the quantity of APs supporting the TR technology, and subCarrierSpacing indicates the SCS supporting the TR technology. {n1, n2} indicates that the quantity of APs supporting the TR technology is n1 or n2 (that is, the UE selects a supported parameter to report), and {scs15, scs30} indicates that the SCS supporting the TR technology is 15 kHz or 30 kHz. It should be noted that the UE may further send third capability signaling, fourth capability signaling, and the like to the network device, to be specific, the UE may send, to the network device, a plurality of groups of capability signaling supporting the TR technology. The plurality of groups of capability signaling may indicate different scenarios in which the UE supports the TR technology. For example, the UE may perform reporting based on a support status of a low-capability ProcessingType 1, a medium-capability ProcessingType2, and a high-capability ProcessingType3. If the UE supports ProcessingType1 and ProcessingType2, the UE may report ProcessingTypel (which, for example, may be capability information corresponding to ProcessingTypel) and ProcessingType2 (which, for example, may be capability information corresponding to ProcessingTypel) to the network device, to indicate that the UE supports the TR technology-based uplink transmission under a scheduling parameter corresponding to a low capability and a medium capability. It should be understood that if the UE reports only ProcessingType2, it indicates that the UE supports the TR technology-based uplink transmission under the scheduling parameter corresponding to the medium capability or a scheduling parameter corresponding to a capability weaker than the medium capability. For example, the plurality of groups of capability information may be defined in the following form:

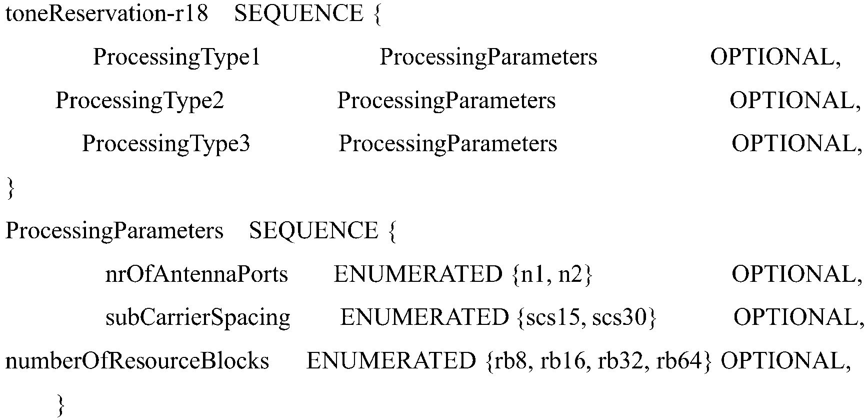

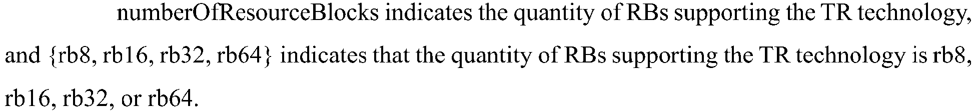

S904: The network device receives the first capability signaling and the second capability signaling from the UE.

In this embodiment of this application, for example, the network device may determine a scheduling parameter for uplink transmission of the UE based on the first capability information indicated by the first capability signaling and the second capability information indicated by the second capability signaling. For example, the scheduling parameter may be equal to or weaker than information corresponding to a maximum capability reported by the UE.

In this implementation, the UE may report, to the network device, a plurality of groups of capability information of supporting the TR technology. The plurality of groups of capability information indicate different scenarios in which the UE supports the TR technology. In this case, the network device may configure, based on the plurality of groups of capability information, scheduling of the TR technology-based uplink transmission performed by the UE, to indicate a specific scenario in which the UE performs the uplink transmission by using the TR technology.

For example, the network device sends first higher layer signaling to the UE, where the first higher layer signaling indicates the UE to enable the TR technology-based uplink transmission.

For example, the network device sends DCI to the UE, where the DCI is used to configure and schedule, based on a parameter equal to the first capability information or the second capability information, the TR technology supported by the UE, or the DCI is used to configure and schedule, based on a parameter weaker than the first capability information or the second capability information, the TR technology supported by the UE. In other words, the DCI includes a scheduling parameter used by the UE to perform the TR technology-based uplink transmission. For example, the UE receives the DCI from the network device, and performs the TR technology-based uplink transmission based on the DCI.

The foregoing describes the method in embodiments of this application, and the following provides an apparatus in embodiments of this application.

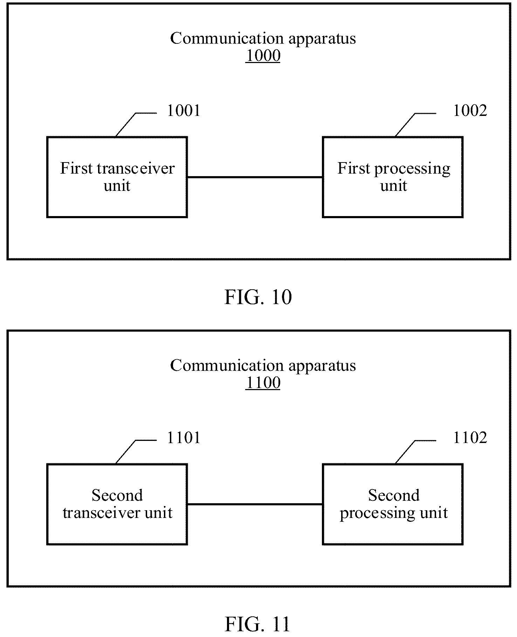

FIG. 10 is a diagram of a structure of a communication apparatus 1000 according to an embodiment of this application. The communication apparatus 1000 is used in UE or a chip in the UE. The communication apparatus 1000 includes a first transceiver unit 1001 and a first processing unit 1002. The first transceiver unit 1001 is configured to:
receive capability query signaling from a network device; and
send first capability signaling to the network device, where the first capability signaling indicates first capability information indicating that the UE supports a tone reservation TR technology.

The first processing unit 1002 may be configured to cooperate with the first transceiver unit 1001 to perform corresponding processing.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In a possible implementation, the first capability information is information corresponding to a maximum capability that the UE supports TR technology-based uplink transmission.

In a possible implementation, the first transceiver unit 1001 is further configured to:
receive downlink control information DCI from the network device, where the DCI is used to schedule, based on the first capability information, the TR technology supported by the UE; and
perform TR technology-based uplink transmission based on the DCI.

In a possible implementation, the first transceiver unit 1001 is further configured to: receive first higher layer signaling from the network device, where the first higher layer signaling indicates the UE to enable the TR technology-based uplink transmission.

In a possible implementation, the first transceiver unit 1001 is further configured to:
receive second higher layer signaling from the network device, where the second higher layer signaling indicates the UE to disable the TR technology-based uplink transmission; and
determine, based on the second higher layer signaling, not to perform the TR technology-based uplink transmission.

In a possible implementation, the first transceiver unit 1001 is further configured to:
send second capability signaling to the network device, where the second capability signaling indicates second capability information indicating that the UE supports the TR technology, and the first capability information and the second capability information indicate different values of a same uplink transmission parameter of the TR technology supported by the UE.

It should be noted that for implementations of the units, refer to the corresponding descriptions of the method embodiments shown in FIG. 5 to FIG. 9. Certainly, the communication apparatus 1000 provided in this embodiment of this application includes but is not limited to the foregoing units and modules. For example, the communication apparatus 1000 may further include a storage unit, and the storage unit may be configured to store program code and data of the communication apparatus 1000.

It can be learned that in the communication apparatus 1000 shown in FIG. 10, the UE may report, to the network device, a capability of supporting the TR technology, so that the network device configures, for the UE based on the capability information reported by the UE, a scheduling parameter for performing TR technology-based uplink transmission, and indicates the UE to perform the TR technology-based uplink transmission in this scenario. The scheduling parameter indicated by the network device helps reduce complexity of implementing the TR technology by the UE, so that a PAPR of an uplink transmission signal of the UE can be reduced, further improving uplink coverage.

FIG. 11 is a diagram of a structure of a communication apparatus 1100 according to an embodiment of this application. The communication apparatus 1100 is used in a network device or a chip in the network device. The communication apparatus 1100 includes a second transceiver unit 1101 and a second processing unit 1102. The second transceiver unit 1101 is configured to:
send capability query signaling to user equipment UE; and
receive first capability signaling from the UE, where the first capability signaling indicates first capability information indicating that the UE supports a tone reservation TR technology.

The second processing unit 1102 may be configured to cooperate with the second transceiver unit 1101 to perform corresponding processing.

In a possible implementation, the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

In a possible implementation, the first capability information is information corresponding to a maximum capability that the UE supports TR technology-based uplink transmission.

In a possible implementation, the second transceiver unit 1101 is further configured to:
send downlink control information DCI to the UE, where the DCI is used to schedule, based on the first capability information, the TR technology supported by the UE.

In a possible implementation, the second transceiver unit 1101 is further configured to:
send first higher layer signaling to the UE, where the first higher layer signaling indicates the UE to enable the TR technology-based uplink transmission.

In a possible implementation, the second transceiver unit 1101 is further configured to:
send second higher layer signaling to the UE, where the second higher layer signaling indicates the UE to disable the TR technology-based uplink transmission.

In a possible implementation, the second transceiver unit 1101 is further configured to:
receive second capability signaling from the UE, where the second capability signaling indicates second capability information indicating that the UE supports the TR technology, and the first capability information and the second capability information indicate different values of a same uplink transmission parameter of the TR technology supported by the UE.

It should be noted that for implementations of the units, refer to the corresponding descriptions of the method embodiments shown in FIG. 5 to FIG. 9. Certainly, the communication apparatus 1100 provided in this embodiment of this application includes but is not limited to the foregoing units and modules. For example, the communication apparatus 1100 may further include a storage unit, and the storage unit may be configured to store program code and data of the communication apparatus 1100.

It can be learned that in the communication apparatus 1100 shown in FIG. 11, the network device may receive a capability, which is reported by the UE, of supporting the TR technology, configure, for the UE based on the capability information reported by the UE, a scheduling parameter for performing TR technology-based uplink transmission, and indicate the UE to perform the TR technology-based uplink transmission in this scenario. The scheduling parameter indicated by the network device helps reduce complexity of implementing the TR technology by the UE, so that a PAPR of an uplink transmission signal of the UE can be reduced, further improving uplink coverage.

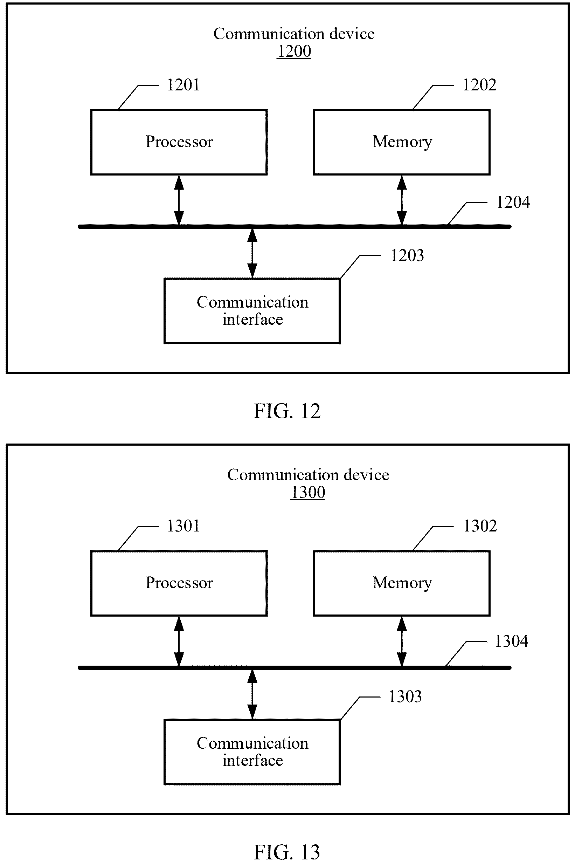

FIG. 12 is a diagram of a structure of a communication device 1200 according to an embodiment of this application. The communication device 1200 includes a processor 1201, a memory 1202, and a communication interface 1203. The processor 1201, the memory 1202, and the communication interface 1203 are connected to each other by using a bus 1204. For example, the communication device 1200 may be UE or a chip system in the UE.

The memory 1202 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1202 is configured to store a related computer program and data. The communication interface 1203 is configured to receive and send data.

The processor 1201 may be one or more central processing units (central processing unit, CPU). When the processor 1201 is one CPU, the CPU may be a single-core CPU, or may be a multi-core CPU.

The processor 1201 in the communication device 1200 is configured to read computer program code stored in the memory 1202 to perform the following operations:
receiving capability query signaling from a network device; and
sending first capability signaling to the network device, where the first capability signaling indicates first capability information indicating that the UE supports a tone reservation TR technology.

It should be noted that for implementation of the operations, refer to the corresponding descriptions of the method embodiments shown in FIG. 5 to FIG. 9.

It can be learned that in the communication device 1200 shown in FIG. 12, the communication device 1200 may report, to the network device, a capability of supporting the TR technology, so that the network device configures, for the UE based on the capability information reported by the communication device 1200, a scheduling parameter for performing TR technology-based uplink transmission, and indicates the communication device 1200 to perform the TR technology-based uplink transmission in this scenario. The scheduling parameter indicated by the network device helps reduce complexity of implementing the TR technology by the communication device 1200, so that a PAPR of an uplink transmission signal of the communication device 1200 can be reduced, further improving uplink coverage.

FIG. 13 is a diagram of a structure of a communication device 1300 according to an embodiment of this application. The communication device 1300 includes a processor 1301, a memory 1302, and a communication interface 1303. The processor 1301, the memory 1302, and the communication interface 1303 are connected to each other by using a bus 1304. For example, the communication device 1300 may be a network device or a chip system in the network device.

The memory 1302 includes but is not limited to a RAM, a ROM, an EPROM, and a CD-ROM. The memory 1302 is configured to store a related computer program and data. The communication interface 1303 is configured to receive and send data.

The processor 1301 may be one or more CPUs. When the processor 1301 is one CPU, the CPU may be a single-core CPU, or may be a multi-core CPU.

The processor 1301 in the communication device 1300 is configured to read computer program code stored in the memory 1302 to perform the following operations:
sending capability query signaling to user equipment UE; and
receiving first capability signaling from the UE, where the first capability signaling indicates first capability information indicating that the UE supports a tone reservation TR technology.

It should be noted that for implementation of the operations, refer to the corresponding descriptions of the method embodiments shown in FIG. 5 to FIG. 9.

It can be learned that in the communication device 1300 shown in FIG. 13, the communication device 1300 may receive a capability, which is reported by the UE, of supporting the TR technology, configure, for the UE based on the capability information reported by the UE, a scheduling parameter for performing TR technology-based uplink transmission, and indicate the UE to perform the TR technology-based uplink transmission in this scenario. The scheduling parameter indicated by the communication device 1300 helps reduce complexity of implementing the TR technology by the UE, so that a PAPR of an uplink transmission signal of the UE can be reduced, further improving uplink coverage.

An embodiment of this application further provides a chip, including a processor, configured to invoke a computer program from a memory and run the computer program, so that a device equipped with the chip performs the method described in any one of embodiments in FIG. 5 to FIG. 9. The chip may be a chip in the UE and the network device.

An embodiment of this application further provides a computer-readable storage medium (Memory). The computer-readable storage medium stores a computer program. When the computer program is run, the method described in any one of embodiments in FIG. 5 to FIG. 9 is implemented. It can be understood that the computer-readable storage medium herein may include a built-in storage medium in the device, and certainly may also include an extended storage medium supported by the device. The computer-readable storage medium provides storage space, and the storage space stores an operating system of the device. In addition, the storage space further stores one or more computer programs suitable for being loaded and executed by the processor of the device. It should be noted that the computer-readable storage medium herein may be a highspeed RAM, or may be a non-volatile memory (non-volatile memory), for example, at least one magnetic disk memory. Optionally, the computer-readable storage medium may be at least one computer-readable storage medium located far away from the processor.

An embodiment of this application further provides a computer program product. The computer program product includes computer program code. When the computer program code is run, the method procedure described in any one of embodiments in FIG. 5 to FIG. 9 is implemented.

In the foregoing embodiments, the description of each embodiment has respective focuses. For a part that is not described in detail in an embodiment, refer to related descriptions in other embodiments.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. When the foregoing integrated unit is implemented in the form of a software functional unit and sold or used as an independent product, the integrated unit may be stored in a computer-readable storage medium.

In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be in a singular form or a plural form. In text descriptions of this application, a character "/" usually indicates an "or" relationship between associated objects.

A sequence of the steps of the method in embodiments of this application may be adjusted, combined, or deleted based on an actual requirement.

The modules of the apparatus in embodiments of this application may be combined, divided, and deleted based on an actual requirement.

As described above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A communication method, applied to user equipment UE or a chip in the UE, wherein the method comprises:
receiving capability query signaling from a network device; and
sending first capability signaling to the network device, wherein the first capability signaling indicates first capability information indicating that the UE supports a tone reservation TR technology.

2. The method according to claim 1, wherein the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

3. The method according to claim 1 or 2, wherein the first capability information is information corresponding to a maximum capability that the UE supports TR technology-based uplink transmission.

4. The method according to any one of claims 1 to 3, further comprising:
receiving downlink control information DCI from the network device, wherein the DCI is used to schedule, based on the first capability information, the TR technology supported by the UE; and
performing TR technology-based uplink transmission based on the DCI.

5. The method according to claim 4, further comprising:
receiving first higher layer signaling from the network device, wherein the first higher layer signaling indicates the UE to enable the TR technology-based uplink transmission.

6. The method according to any one of claims 1 to 3, further comprising:
receiving second higher layer signaling from the network device, wherein the second higher layer signaling indicates the UE to disable the TR technology-based uplink transmission; and
determining, based on the second higher layer signaling, not to perform the TR technology-based uplink transmission.

7. The method according to any one of claims 1 to 6, further comprising:
sending second capability signaling to the network device, wherein the second capability signaling indicates second capability information indicating that the UE supports the TR technology, and the first capability information and the second capability information indicate different values of a same uplink transmission parameter of the TR technology supported by the UE.

8. A communication method, applied to a network device or a chip in the network device, wherein the method comprises:
sending capability query signaling to user equipment UE; and
receiving first capability signaling from the UE, wherein the first capability signaling indicates first capability information indicating that the UE supports a tone reservation TR technology.

9. The method according to claim 8, wherein the first capability information indicates at least one of the following uplink transmission parameters: a quantity of uplink carrier components CCs supporting the TR technology, a quantity of antenna ports APs supporting the TR technology, a subcarrier spacing SCS supporting the TR technology, and a quantity of resource blocks RBs supporting the TR technology.

10. The method according to claim 8 or 9, wherein the first capability information is information corresponding to a maximum capability that the UE supports TR technology-based uplink transmission.

11. The method according to any one of claims 8 to 10, further comprising:
sending downlink control information DCI to the UE, wherein the DCI is used to schedule, based on the first capability information, the TR technology supported by the UE.

12. The method according to claim 11, further comprising: sending first higher layer signaling to the UE, wherein the first higher layer signaling indicates the UE to enable the TR technology-based uplink transmission.

13. The method according to any one of claims 8 to 10, further comprising:
sending second higher layer signaling to the UE, wherein the second higher layer signaling indicates the UE to disable the TR technology-based uplink transmission.

14. The method according to any one of claims 8 to 13, further comprising:
receiving second capability signaling from the UE, wherein the second capability signaling indicates second capability information indicating that the UE supports the TR technology, and the first capability information and the second capability information indicate different values of a same uplink transmission parameter of the TR technology supported by the UE.

15. A communication device, comprising a processor and a memory, wherein the memory is configured to store one or more programs, and the program comprises instructions used to perform the method according to any one of claims 1 to 7.

16. A communication device, comprising a processor and a memory, wherein the memory is configured to store one or more programs, and the program comprises instructions used to perform the method according to any one of claims 8 to 14.

17. A chip, comprising a processor, configured to invoke a computer program from a memory and run the computer program, so that a device equipped with the chip performs the method according to any one of claims 1 to 7 or claims 8 to 14.

18. A computer-readable storage medium, wherein the computer-readable storage medium stores a computer program; and when the computer program is run, the method according to any one of claims 1 to 7 or claims 8 to 14 is implemented.

19. A computer program product, wherein the computer program product comprises computer program code; and when the computer program code is run, the method according to any one of claims 1 to 7 or claims 8 to 14 is implemented.
